# EUROPEAN PATENT APPLICATION

(11) **EP 0 696 746 A1**
(43) Date of publication of application: **14.02.1996**
(21) Application number: 95420209.9
(22) Date of filing: 24.07.1995
(51) Int. Cl.: G02B 6/06, G03C 5/02

(54) **Spectral sensitometer for a photosensitive surface**

(30) Priority: 08.08.1994 FR 9409969
(71) Applicant: KODAK-PATHE, F-75594 Paris Cedex 12 (FR); EASTMAN KODAK COMPANY, Rochester, New York 14650-2201 (US)
(72) Inventor: Sirand-Rey, Gérard René, c/o Kodak-Pathe, F-71102 Chalon Sur Saone Cedex (FR); Touchard, Nicolas Patrice B., c/o Kodak-Pathe, F-71102 Chalon Sur Saone Cedex (FR)
(74) Representative: Boulard, Denis

(57) **Abstract**

The invention concerns a spectral sensitometer for a photosensitive surface.

The sensitometer according to the invention comprises: i) a light-integrating waveguide (10) for receiving, guiding and integrating the monochromatic light from illumination means; ii) a plurality of optical fibres (12), the fibres of which are arranged so as to define a single entry face (11), the plurality of fibres being divided into a plurality of exit beams (13), each of the exit beams having a number of fibres which is chosen so as to produce a plurality of light beams, the respective intensities of which vary in a geometrical progression at a given rate; and iii) a light-integrating waveguide (16) associated with each of the exit beams, each of the waveguides (16) having a first end placed opposite the end face of the corresponding exit beam (13), the second end being placed opposite the photosensitive surface (17), so as to expose the photosensitive surface to the corresponding light beam.

Application to the sensitometry of photographic films.

## Description

### Field of the Invention

The invention relates to sensitometry and, more particularly, to a device for determining the spectral sensitivity of a photosensitive surface and, in particular, of a photographic product.

### Background of the Invention

Sensitometers for photosensitive products are well known in the case of the calibration of photosensitive products by determining the density of the film exposed to a given quantity of light.

According to a first technique, a first segment of the film is exposed by means of light radiation with a first intensity. The film is then moved with respect to the exposure means so as to expose the film, segment by segment, to different light intensities. An exposure of the film is thus recreated which is equivalent to one which would be obtained through what is commonly known as the "sensitometric wedge". This technique, although very accurate, has the drawback of taking a long time to apply and being very tedious.

According to another known technique, the sensitivity of photographic films is measured and a wedge is used which makes it possible gradually to modify the exposure to be given to the film.

There exist, in the state of the art, different types of wedge sensitometers. By way of example, sensitometers with absorbent stepped wedges may be cited. The absorbent stepped wedges are in the form of series of discontinuous increasing opacities. They constitute a practical system for producing sensitograms because they provide graduations of light very simply, but have neutrality defects with respect to certain forms of radiation. The best known devices of this type are: the DIN sensitometer which includes a scale of opacities with 30 density zones graded from 0 to 3, and behind which the sensitive layer is placed; the high-intensity Kodak Type 6 sensitometer consisting of a moving vertical lamp carried by a carriage which moves at a constant speed behind a stepped wedge. The latter, which has 21 segments of 10 mm, is placed against the sensitive surface; the Kodak Type 7 sensitometer comprises a carriage carrying a lamp and having an aperture which moves at a constant speed behind a sensitometric wedge; the Kodak Type 7A sensitometer comprises a fixed light box, the optical axis of which is parallel to the front face of the device and a rotary drum carrying the sample film; the Macbeth Quantalog sensitometer has a carriage driven by a constant-speed synchronous motor and an adjustable aperture which moves in front of the fixed assembly; the Herrnfeld 1531 sensitometer, the exposure of which is modulated by a continuous or stepped wedge, placed against the film. This list is, of course, not exhaustive.

There also exists another type of wedge, generally known as the photometric absorbent wedge. Wedges of this type (or the neutral grey type) are designed to absorb the incident light flux gradually. Such a wedge may be compared with a system of several superimposed parallel absorbent layers. These wedges also have the drawback of never being absolutely neutral, their absorbency varying to a greater or lesser extent with the wavelength. In addition, such techniques require the ability to illuminate a relatively large segment uniformly. Finally, the light output of these systems is low.

Therefore one of the objects of the present invention is to provide a spectral sensitometer which does not have the drawbacks discussed above with reference to known devices.

Other objects of the present invention will emerge in greater detail from the following description.

### Summary of the Invention

These objects, and others, are achieved by means of a spectral sensitometer for a photosensitive surface comprising:
a) illumination means for producing monochromatic radiation, the wavelength of which varies within a given range;
b) means for exposing a plurality of segments of the photosensitive surface to the said monochromatic radiation with respective intensities in geometrical progression at a given rate, this being for different wavelengths within the said range;
c) means for permitting relative movement of the photosensitive surface with respect to the exposure means,

the sevice being characterised in that the exposure means comprise:
i) a first light-integrating waveguide for receiving, guiding and integrating the light from the illumination means so as to produce a uniform light beam;
ii) a plurality of optical fibres, the fibres of which are arranged so as to define a single entry face disposed so as to receive the said uniform light beam, the plurality of fibres being divided into a plurality of exit beams so as to form a plurality of end faces, each of the exit beams having a variable number of fibres chosen so as to produce a plurality of light beams, the respective intensities of which vary according to the said geometrical progression; and
iii) a plurality of second light-integrating waveguides associated respectively with each of the said exit beams, each of the second waveguides having a first end placed opposite the end face of the corresponding exit beam, the second end being placed opposite the photosensitive surface, so as to expose the said surface to the corresponding light beam, the shape of the second waveguides being adapted to the shape of the segments to be produced.

### Brief description of the drawings

In the following description, reference will be made to the drawing in which:
Fig 1 shows diagrammatically an embodiment of the sensitometer according to the present invention; and
Fig 2 shows diagrammatically a detailed view of the exposure means used in an embodiment of the device according to the present invention.

### Detailed description of the Invention

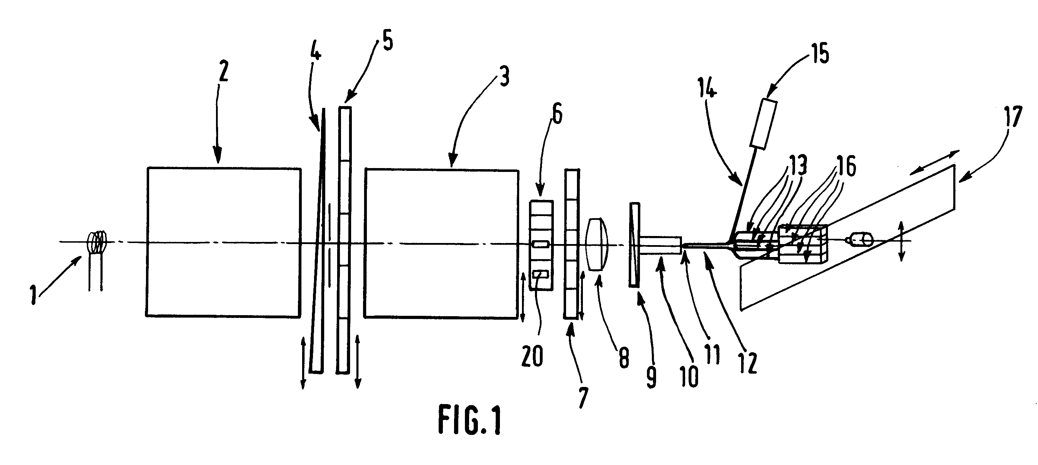

As shown in Fig 1, the device according to the present invention comprises a light source designed to produce continuous radiation. Typically, the light source emits light within a spectrum of wavelengths from about 300 to 900 nm. By way of example, a 1 kW tungsten-halogen lamp is used. Advantageously, a lamp is used, the filament of which is of a size enabling it to serve as an entry aperture for a first monochromator 2, which will be discussed below. This affords a simplification of the assembly and optimum matching of the source to the first monochromator. By way of example, the dimensions of the filament are about 5 mm x 20 mm.

The beam thus produced by the light source 1 enters a first monochromator, at the exit of which monochromatic radiation is produced. A second monochromator 3, which is optically and mechanically coupled to the first 2, is used downstream of the first to reduce the amount of stray light. Advantageously, the monochromators used are monochromators with etched gratings. A motorised system moves the gratings of each of the monochromators appropriately, so as to cause the wavelength of the light beam to vary, typically between 300 and 900 nm. All these arrangements are well known to a person skilled in the art and consequently do not require further description. In a conventional manner, the exit aperture of the first monochromator 2 serves as an entry aperture for the second 3.

According to the embodiment shown, a system is disposed between the two monochromators enabling the light power to be varied continuously (for example, in a ratio 10). Typically, such a system comprises a continuous-variation neutral densitometric wedge 4 which moves in front of the beam and a series of optical densities 5 with increasing values which can be placed successively in the beam. The combination of 4 and 5 makes it possible to generate an optical density which varies almost continuously. By way of example, the means 4 and 5 are driven by means of a drive system whose position is servo-controlled. The exit aperture of the monochromator is in the form of a series 6 of several apertures 20, the widths of which are calculated in accordance with the width of the spectral band which it is desired to obtain.

The beam from the exit aperture of the monochromator 3 passes through a device enabling spectra having an order above 1 to be eliminated. Typically, a series 7 of low-pass optical filters is used, placed in front of the exit aperture of the monochromator in accordance with the chosen wavelength.

The beam passes through an optical system 8 designed to focus the said beam on the entry face of a light-integrating waveguide 10, a shutter 9 being disposed at the entry to the waveguide. Preferably, a simple flat convex lens is used, positioned so as to produce a virtually circular beam over the entire range of wavelengths used. Thus the form of the beam at the entry to the waveguide 10 is substantially independent of the width of the exit aperture used.

According to a first embodiment, the waveguide consists of a transparent cylindrical bar (in a material which is compatible with the wavelengths used, polished glass or quartz for example). The material must have a refractive index which is sufficient to constitute a good light guide. The light integration and guiding characteristics depend directly on the ratio between the length of the guide 10 and the diameter of the guide. Typically, this ratio is about 10. Other ratios may of course be used in accordance with the desired quality. The best possible compromise is sought between the guiding quality of the guide and its absorption.

According to a particular embodiment, a cylindrical bar made of silica is used, with a length of 60 mm for a diameter of 6 mm. This waveguide generates at its exit a homogenous light beam, the geometry of which is substantially independent of the geometry of the entry beam. The homogenous beam thus produced is directed opposite the entry face 11 of a plurality of optical fibres 12. This entry face of the plurality of fibres is disposed with respect to the exit of the waveguide so as to make good optical coupling possible. Advantageously, the diameter of the plurality of fibres is slightly less than the exit diameter of the waveguide 10 so as to minimise the effects, related to variations in alignment of one with respect to the other, on the light power transmitted. The plurality of fibres has a single entry face 11 and is then divided into a plurality of exit beams 13 so as to generate a plurality of exit light beams with respective intensities in geometrical progression at a given rate. This rate is typically 2. The number of optical fibres in each beam is chosen so as to achieve the said geometrical progression. Thus, for such a geometrical progression at rate 2, the respective number of fibres in each of the exit beams is n, 2n, 4n, 8n, 16n ..., Xn, the sum of the number of fibres in each of the exit beams being equal to the number of fibres in the entry beam.

To increase the uniformity of the beams produced, fibres of mixed types are used, that is to say that the distribution of the fibres at the entry to or exit from the beam is made random. Each of the exit beams in the bunch of fibres 12 is placed opposite a light-integrating waveguide 16 of the same type as the one 10 referred to previously. However, the cross section of the bars 16 is chosen in accordance with the shape of the exposure segments to be produced on the photographic film 17, the sensitometric characteristics of which it is intended to measure. Advantageously, bars with a square cross section are used, so as to produce segments which are contiguous on the film and the intensities of which vary according to the geometrical progression referred to above. If this is so, it is important for the radius of curvature of the edges of the bar to be minimal in order to minimise the stray reflections which are inherent in this type of section.

According to a particular embodiment, in order to mitigate the imperfections of the beam of optical fibres, and in order to adjust the geometrical progression achieved to a precise value, the distance d between each exit fibre 13 in the bunch 12 and the associated waveguide 16 can be modified. To this end, the exit beams 13 are mounted so as to slide on a suitable support. The position of each exit beam can be individually modified.

The exposure is thus achieved of a plurality of segments of photosensitive material, at different intensities for a given wavelength. In order to achieve such an exposure for different wavelengths (between 300 and 900 nm), a relative movement of the photosensitive support with respect to the series of bars 16 is produced. Advantageously, the film is moved by means of a cylinder 19 driven by a motor 18 and onto which the film is drawn, this solution having the advantage of being simpler to apply.

The light comes from the bars 16, forming a wide angle. In order to have good definition of the segments exposed and to avoid the segments overlapping, the film must be positioned in a plane very close to the exit face of the bars 16. Typically this distance is of the order of a few tenths of a millimetre.

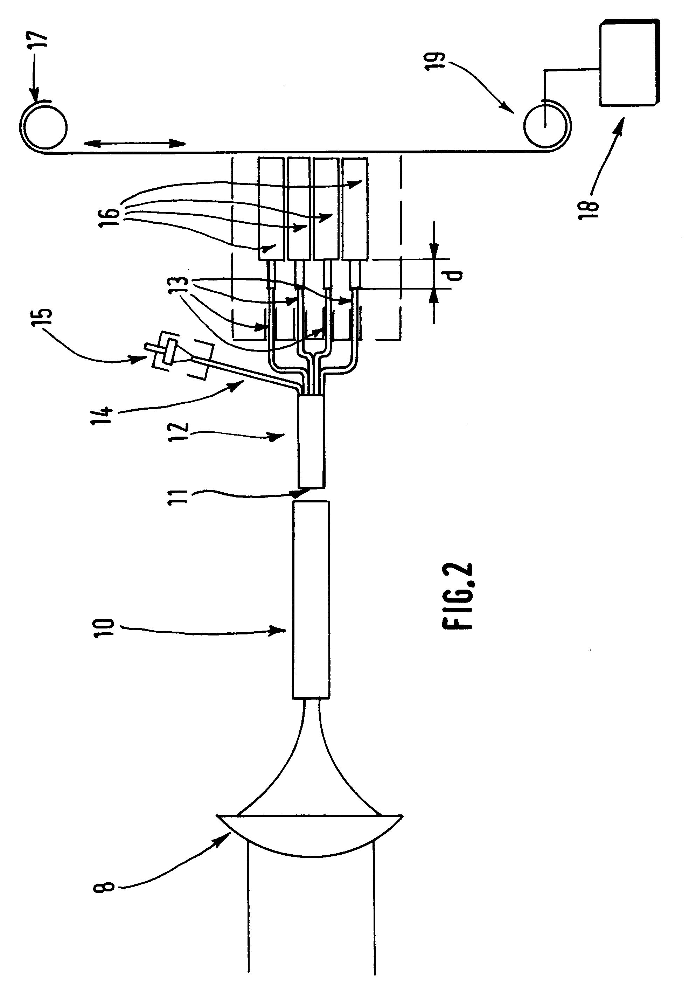

In another preferred embodiment, some of the light introduced into the bunch of fibres 12 is taken off by an auxiliary beam 14 having a known number of fibres and the end of which is placed opposite a photoreceptor 15. Such a system is shown in detail in Fig 2. The response of the photoreceptor 15 has been calibrated in accordance with the light power received by the different segments on the film 17. This system makes it possible to measure the light energy received by each segment of the film 17 at each exposure, the number of fibres in each of the exit beams 13 and the number of fibres in the auxiliary beam 14 being known. The quantity of light taken off depends on the precision of the measurement, the response time of the photoreceptor and the quantity of light necessary to produce the film segments. By way of example, about a quarter of the total light is taken off. This type of arrangement ensures constancy in the ratio between the intensity received by the photoreceptor and the light intensity produced at the exit from each of the bars 16. This makes it possible to determine the exact quantity of light received by the film at each of the segments. Such a direct measurement in real time would not be physically possible if light were not thus taken off by means of an auxiliary beam with a known number of fibres.

The advantages of the system which has just been described are principally as follows: a series of segments of a photosensitive support are exposed with a light energy at a given geometrical progression, this being without causing the exposure time to vary. This progression being independent of the wavelength of the radiation used. This is valid over a range of wavelengths which may range from ultraviolet to near infrared. The principle could be usable over a wider range of wavelengths if suitable materials are chosen; another advantage lies in the fact that, during the exposure of the film, a precise measurement can be made of the quantities of light received by the different segments of the film; this allows the use of light sources whose stability is not perfect. This is not the case with traditional systems, for which it is preferable to have a highly stable light source.

The present invention has just been described with reference to preferred embodiments. It is obvious that modifications may be made to these preferred embodiments without departing from the spirit of the invention as claimed.

## Claims

1. Spectral sensitometer for a photosensitive surface (17), comprising:
a) illumination means (1-6, 20) for producing monochromatic radiation, the wavelength of which varies within a given range;
b) means (8-16) for exposing a plurality of segments of the photosensitive surface (17) to said monochromatic radiation with respective intensities in geometrical progression at a given rate, this being for different wavelengths within the said range;
c) means (18, 19) for permitting relative movement of the said surface (17) with respect to the exposure means;
said device being characterised in that the said exposure means comprise:
i) a first light-integrating waveguide (10) for receiving, guiding and integrating the light from said illumination means so as to produce a uniform light beam;
ii) a plurality of optical fibres (12), the fibres of which are arranged so as to define a single entry face (11) disposed so as to receive the said uniform light beam, said plurality of fibres being divided into a plurality of exit beams (13) so as to form a plurality of end faces, each of the exit beams having a variable number of fibres chosen so as to produce a plurality of light beams, the respective intensities of which vary according to said geometrical progression; and
iii) a plurality of second light-integrating waveguides (16) associated respectively with each of the said exit beams each of said second waveguides (16) having a first end placed opposite the end face of the corresponding exit beam (13), the second end being placed opposite the photosensitive surface (17), so as to expose said surface to the corresponding light beam, the shape of said second waveguides (16) being adapted to the shape of the segments to be produced.

2. Spectral sensitometer according to Claim 1, characterised in that one of the exit beams (14) has its second end placed opposite detection means (15) so as to measure the light intensity of the corresponding light beam (14), said exit beam having a specific number of fibres.

3. Spectral sensitometer according to Claim 1, characterised in that said illumination means comprises a tungsten lamp, associated with an arrangement of monochromators (2, 3).

4. Sensitometer according to Claim 1, characterised in that it comprises means for adjusting the respective distances (d) between the end face of the exit beams (13) and said first end of the associated second waveguide (16).

5. Sensitometer according to any one of Claims 1 to 4, characterised in that the said waveguides (12, 16) consist of bars of quartz or polished glass.
